# EUROPÄISCHE PATENTSCHRIFT

(11) **EP 3 168 641 B1**
(45) Veröffentlichungstag und Bekanntmachung des Hinweises auf die Patenterteilung: **03.06.2020**
(21) Anmeldenummer: 16163529.7
(22) Anmeldetag: 01.04.2016
(51) Int. Cl.: G01S 7/484, G01S 7/486, G01S 17/10, G01S 17/42, G01S 7/481

(54) **VERFAHREN UND VORRICHTUNG ZUR OPTISCHEN DISTANZMESSUNG**
METHOD AND DEVICE FOR OPTICALLY MEASURING DISTANCES
PROCEDE ET DISPOSITIF DE MESURE DE DISTANCE OPTIQUE

(30) Priorität: 11.11.2015 EP 15194125
(43) Veröffentlichungstag der Anmeldung: 17.05.2017
(73) Patentinhaber: Ibeo Automotive Systems GmbH, 22143 Hamburg (DE)
(72) Erfinder: Kiehn, Michael, 21039 Hamburg (DE); Köhler, Michael, 22527 Hamburg (DE)
(74) Vertreter: RGTH

(56) Entgegenhaltungen:
- EP-A1- 2 851 704
- DE-A1- 19 717 399
- DE-A1-102010 006 943
- JP-A- S 646 716

## Beschreibung

### Technisches Gebiet

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, beruhen auf dem Time of Flight Prinzip. Meistens wird ein scannender Sensor, bevorzugterweise LIDAR (Abkürzung für "Light detection and ranging") Sensor, eingesetzt, der periodisch Pulse aussendet. Die Pulse werden von Objekten reflektiert, wobei die reflektierten Pulse detektiert werden. Aus der Bestimmung der Laufzeit der Pulse von dem Sensor zu Objekten und zurück kann mithilfe der Lichtgeschwindigkeit auf die Distanz zu diesen Objekten geschlossen werden. Insbesondere werden 3D LIDAR Sensoren eingesetzt, bei denen aus dem Stand der Technik zwei verschiedene Verfahren zur Distanzmessung bekannt sind:
Zu Einen gibt es scannende LIDAR Sensoren, denen in der Regel ein mechanisches Scannen, d.h. eine Rotationsbewegung oder Oszillation des LIDAR Sensors oder einem Bestandteil davon, zugrunde liegt. Ein Beispiel für einen solchen scannenden LIDAR Sensor ist bspw. in EP 2 388 615 A1 beschrieben, bei dem das Sichtfeld des Senders und das des Empfängers mechanisch abgelenkt werden.

Die DE 10 2010 006 943 A1 offenbart einen Pulslaufzeitsensor für große Entfernungen mit mindestens einem Impulssender und mindestens einem Impulsempfänger, einer Signalakquisition und einer Digitalisierung der Empfangssignale.

In der DE 197 17 399 A1 wird eine Einrichtung zur Bestimmung von Abstand und Art von Objekten sowie der Sichtweite nach dem Pulslaufzeitverfahren offenbart. Auch die JP S64 6716 A offenbart eine Vorrichtung zur Bestimmung der Pulslaufzeit von Laserpulsen.

Nachteilig bei den aus dem Stand der Technik bekannten, scannenden LIDAR Sensoren, ist die Tatsache, dass das Scannen stets mit einer Bewegung mechanischer Teile einhergeht. Bei diesen beweglichen Teilen handelt es sich vor allem um relativ große Rotationsspiegel oder sogar größere Teile, bspw. den Scankopf, des Sensors, bei denen die insgesamt bewegte Masse sehr groß ist. Aus diesem Grund trägt der Scanmechanismus bei dieser Art von LIDAR Sensoren grundsätzlich maßgeblich zur Baugröße und zu den Kosten des Sensors bei, da abgesehen von den bewegten Teilen ebenso Platz für eine entsprechende Elektronik zur Ansteuerung der Elektronik zur Verfügung stehen muss.

Eine andere Art von 3D LIDAR Sensoren sind Flash LIDAR Sensoren, bei denen das gesamte Sichtfeld zur gleichen Zeit ausgeleuchtet wird. Dies erfordert allerdings sehr große Pulsleistungen, typischerweise einige kW, damit eine technisch sinnvolle Reichweite in einem großen Sichtfeld erzielt werden kann. Dadurch dass empfängerseitig während des Messfensters immer das gesamte Sichtfeld ausgewertet wird, sind die aus dem Stand der Technik bekannten Flash LIDAR Sensoren äußerst anfällig für Fremdbeeinflussung. Dies gilt für gezielte Angriffe sowie für unbewusste Störungen durch gleichartige Sensoren anderer Fahrzeuge, die entgegen kommen oder die gleiche Szene betrachten. Gerade im Bereich des autonomen Fahrens, d.h. der fahrerlosen Navigation eines Fahrzeugs, ist eine derartige fehlende Robustheit gegen gezielt eingebrachte oder unbewusst vorhandene Störquellen insbesondere aus Sicherheitsaspekten nicht hinnehmbar.

### Darstellung der Erfindung: Aufgabe, Lösung, Vorteile

Der Erfindung liegt die Aufgabe zu Grunde ein Verfahren zur Distanzmessung derart zu verbessern, dass auf bewegliche Teile zum Scannen verzichtet wird. Ferner soll das Verfahren möglichst robust gegenüber Störpulsen ausgebildet sein. Ziel ist es ferner eine entsprechende Vorrichtung zur Distanzmessung bereitzustellen, die nicht auf bewegliche zum Scannen angewiesen ist und die ferner insbesondere mit einer erhöhten Robustheit gegenüber Störpulsen ausgebildet ist.

Gelöst wird die oben genannte Aufgabe durch das erfindungsgemäße Verfahren zur optischen Distanzmessung, nach dem eine Vielzahl von Messpulsen durch mindestens eine Sendematrix mit mehreren Sendeelementen ausgesendet wird. Mindestens ein ausgesendeter Messpuls wird von einem Messobjekt in Form eines reflektierten Messpulses reflektiert wird, der durch mindestens eine Empfangsmatrix mit mehreren Empfangselementen empfangen wird. Bei dem von dem Messobjekt reflektierten Messpuls handelt es sich um einen Messpuls, der zuvor ausgesendet wurde, nur dass sich durch die Reflexion an dem Messobjekt seine Ausbreitungsrichtung verändert hat. Man kann den reflektierten Messpuls somit als Echo des ausgesendeten Messpulses verstehen. Es wird die Laufzeit des mindestens einen Messpulses zum Messobjekt und zurück ermittelt und aus dieser mithilfe der Lichtgeschwindigkeit die vom Messpuls zurückgelegte Distanz zu dem Messobjekt bestimmt. Es ist auch möglich, dass ein Messpuls nacheinander auf mehrere hintereinander liegende Messobjekte trifft, die nur eine teilweise Überdeckung haben, sodass ein Messpuls mehrere Echos, d.h. mehrere reflektierte Pulse, erzeugt.

Erfindungsgemäß weist die Sendematrix eine erste Untermenge der Sendeelemente und eine zweite Untermenge der Sendeelemente jeweils umfassend mindestens ein Sendeelement auf, wobei die Sendeelemente der Sendematrix derart aktiviert und/oder deaktiviert werden, dass zu einem ersten Zeitpunkt ausschließlich die erste Untermenge der Sendeelemente aktiv ist, sodass ausschließlich das mindestens eine der ersten Untermenge der Sendeelemente zugordnete Sendeelement einen Messpuls aussendet, und wobei zu einem zweiten Zeitpunkt ausschließlich die zweite Untermenge der Sendeelemente aktiv ist, sodass ausschließlich das mindestens eine der zweiten Untermenge der Sendeelemente zugordnete Sendeelement einen Messpuls aussendet.

Eine optische Distanzmessung zeichnet sich dadurch aus, dass unter Ausnutzung von optischen Signalen, insbesondere optischen Messpulsen, Distanzen bestimmt werden. Unter dem Begriff "Distanz" ist eine Entfernung zu verstehen. Unter der vom Messpuls zurückgelegten Distanz ist die Strecke zwischen dem Sendeelement, das den Messpulse ausgesandt hat, und dem Messobjekt plus der Strecke zwischen dem Messobjekt und dem Empfangselement der Empfangsmatrix, das den entsprechenden reflektierten Messpulse empfangen hat, zu verstehen. Insbesondere umfasst das Verfahren die Berücksichtigung der genauen Position der Sendeelementes und des Empfangselementes, insbesondere in Relation zueinander. Da es sich bei dem Messobjekt typischerweise um ein dreidimensionales Objekt handelt, sodass einige Bereiche des Messobjektes näher und andere Bereiche des Messobjektes weiter entfernt angeordnet sein könnten, ist mit dem Begriff "Distanz zu dem Messobjekt" die Entfernung zu zumindest einer Stelle des Messobjektes gemeint, und zwar der Stelle, auf die ein Messpuls aufgetroffen und an der dieser reflektiert wurde. Mit Laufzeit ist die Zeit zu verstehen, die der Messpuls für die genannte Distanz gebraucht hat. Das Messobjekt befindet sich insbesondere im senderseitigen und/oder empfängerseitigen Sichtfeld. Bei einem Messpuls handelt es sich um ein optisches, insbesondere elektromagnetisches, Signal. Der Messpuls ist vorteilhafterweise ein Lichtpuls, d.h. ein Puls mit einer Wellenlänge aus dem für das menschliche Auge sichtbaren Teil des elektromagnetischen Spektrums. Bevorzugterweise weist ein Messpuls eine Pulsdauer auf. So kann man einen Messpuls als eine zeitlich begrenzte Portion elektromagnetischer Strahlung verstehen. Da es sich bei einem Messpuls um ein elektromagnetisches Signal handelt und somit die Geschwindigkeit des Pulses bekannt ist, kann aus der Laufzeit eines Messpulses mithilfe der Lichtgeschwindigkeit darauf geschlossen werden, welche Strecke der Messpuls in der Laufzeit hinter sich gebracht hat.

Bei einer Matrix handelt es sich insbesondere um eine zweidimensionale Anordnung von Elementen, hier Sende- oder Empfangselementen, oder Teilen oder Oberflächen davon, sprich einer Anordnung in einer Ebene. Insbesondere handelt es sich um einen dreidimensionalen Körper, auf dem Elemente oder Teile oder Oberflächen davon in einer zweidimensionalen Ebene angeordnet sind. In einer zu der Ebene senkrechten Richtung hat die Matrix bevorzugterweise ebenfalls eine Ausdehnung. Die Matrix kann somit insbesondere als dreidimensionaler, insbesondere plattenförmiger, Körper gesehen werden, auf dessen einen Oberfläche die Sende- oder Empfangselemente angeordnet sind. Insbesondere weisen die Elemente selber eine dreidimensionale Ausdehnung, sprich eine Ausdehnung nicht nur in der Ebene, sondern auch senkrecht dazu auf. Vorteilhafterweise weisen die Sendeelemente eine aktive Fläche zum Versenden von Messpulsen auf. Darunter ist vor allem die Fläche des Sendeelementes zu verstehen, an der ein Messpuls das Element verlässt. Auch die Empfangselemente weisen vor allem eine aktive Fläche zum Empfangen der Messpulse auf. Das ist vor allem die Fläche, auf denen ein Messpuls detektiert wird. Vorteilhafterweise sind genau diese aktiven Flächen der Sende- und/oder Empfangselemente mittels der Matrix in einer planen Ebene angeordnet.

Die Sendeelemente sind in einer ersten Ebene der Sendematrix und die Empfangselemente in einer zweiten Ebene der Empfangsmatrix angeordnet. Dabei sind die erste und die zweite Ebene vorteilhaft parallel zueinander ausgebildet.

Insbesondere grenzen die Sendeelemente auf der Sendematrix und/oder die Empfangselemente auf der Empfangsmatrix nicht direkt aneinander. Vorteilhafterweise sind die Sendeelemente auf der Sendematrix und/oder die Empfangselemente auf der Empfangsmatrix gleichmäßig, insbesondere in einem gleichmäßigen Gitterraster, angeordnet.

Insbesondere lässt sich die Anordnung der Elemente auf der Matrix in Spalten und/oder Zeilen aufteilen, wobei die Spalten und/oder die Zeilen bevorzugterweise einen konstanten Spaltenabstand bzw. Zeilenabstand aufweisen. Insbesondere sind der Spaltenabstand und der Zeilenabstand gleich groß. In einer besonders bevorzugten Ausführung sind die Zeilen der Sendematrix und/oder Empfangsmatrix jeweils um einen halben Spaltenabstand gegeneinander versetzt.

Die Elemente einer Spalte und/oder einer Zeile weisen vorteilhaft einen konstanten Abstand zueinander auf. Bevorzugterweise umfasst eine Spalte ein Element in jeder Zeile der Matrix, während insbesondere eine Zeile ein Element in jeder Spalte der Matrix aufweist. Würde man gedanklich eine Gerade durch jede Zeile sowie durch jede Spalte legen, insbesondere durch die jeweiligen Mittelpunkte der Elemente jeder Zeile und Spalte der Matrix, wären die Geraden der Zeilen bevorzugterweise alle parallel zueinander. Auch die Geraden der Spalten würden vorteilhafterweise parallel zueinander angeordnet sein. Dabei würden sich die Geraden der Spalten und die Geraden der Zeilen untereinander bevorzugterweise im Wesentlichen im rechten Winkel schneiden. Der Abstand zwischen benachbarten Geraden der Spalten entspräche dem Spaltenabstand, der Abstand zwischen benachbarten Geraden der Zeilen dem Zeilenabstand. Alternativ zu einer uniformen Ausgestaltung können die Abstände zwischen den Elementen auf der Sendematrix und/oder der Empfangsmatrix variieren. Insbesondere kann der Abstand im zentralen Bereich der Matrix anders ausgestaltet sein als in den Randbereichen der Matrix, sodass sich in diesen Bereichen unterschiedliche Winkelauflösungen ergeben.

Insbesondere handelt es sich bei einem Sendeelement der Sendematrix um einen Laser, insbesondere einen gepulste Laser, sodass die Sendematrix eine Vielzahl von Lasern umfasst.

Die Sendeelemente sind vorteilhafterweise derart angeordnet, dass die Messpulse von verschiedenen Sendeelementen in Richtungen ausgesendet werden, die im Wesentlichen parallel zueinander sind. Der Begriff "im Wesentlichen" soll vor allem eine Divergenz der Sendeelemente und somit eine geringfügige Abweichung von einer parallelen Aussendung berücksichtigen.

Die Sendeelemente der Sendematrix bildet eine Menge der Sendeelemente. Unter eine Untermenge ist eine echte Teilmenge der Menge der Sendeelemente zu verstehen, sodass die Untermenge kleiner ist als die Menge der Sendeelemente der Sendematrix. Insbesondere unterscheiden sich die erste Untermenge und die zweite Untermenge, wobei sie sich vorteilhaft nicht überschneiden. Kein Sendeelement der ersten Untermenge ist somit ein Teil der zweiten Untermenge und umgekehrt.

Erfindungsgemäß werden die Sendeelemente der Sendematrix derart aktiviert und/oder deaktiviert, dass zu einem ersten Zeitpunkt ausschließlich die erste Untermenge der Sendeelemente aktiv ist. Dabei senden die Sendeelemente der ersten Untermenge bei Aktivität jeweils mindestens einen Messpuls, insbesondere jeweils mehrere Messpulse in periodischer Weise, aus. Ferner kann die Aussendung ebenso aperiodisch, bspw. auf Basis von Pseudozufallsfolgen, erfolgen. Zu einem zweiten Zeitpunkt sind ausschließlich die zweite Untermenge der Sendeelemente aktiv, sodass ausschließlich das mindestens eine der zweiten Untermenge der Sendeelemente zugordnete Sendeelement einen Messpuls, insbesondere mehrere Messpulse in periodischer Weise, aussendet. Der erste Zeitpunkt unterscheidet sich von dem zweiten Zeitpunkt, insbesondere folgt der zweite Zeitpunkt auf den ersten Zeitpunkt. Vorteilhafterweise umfasst die erste und/oder die zweite Untermenge eine Vielzahl von Sendeelementen, die bei Aktivität simultan je mindestens einen oder mehrere Messpulse aussenden. Deaktiviert werden vor allem Elemente, die unmittelbar vor dem ersten Zeitpunkt aktiv sind, jedoch nicht zur aktivierenden Untermenge gehören.

Durch die simultane Aktivierung von nur Untermengen der Sendeelemente können gezielt Teilbereiche des Sichtfeldes ausgeleuchtet werden. Dadurch dass sich die erste und die zweite Untermenge unterscheiden, leuchten die Messpulse der ersten Untermenge einen anderen, insbesondere räumlich zusammenhängenden, Teilbereich des Sichtfeldes aus als die Messpulse der zweiten Untermenge. Unter dem Begriff Ausleuchtung ist zu verstehen, dass in einen bestimmten Teil des Sichtfeldes Messpulse gesandt und aus diesem empfangen werden. Durch eine zeitliche Aneinanderreihung der Aktivierung verschiedener Untermengen nacheinander kann ein Scannen des Sichtfeldes ohne die dazu notwendige Verwendung jeglicher beweglicher Teile erreicht werden. Unter dem Begriff "Scannen" ist ein Abtasten des Sichtfeldes zu verstehen.

Vorteilhafterweise wird eine einzige Sendematrix und/oder Empfangsmatrix verwendet. Alternativ können mehrere Sendematrizen und/oder Empfangsmatrizen eingesetzt werden, wobei die Sendematrizen bevorzugterweise sämtlich in der ersten Ebene liegen und/oder die Empfangsmatrizen vorteilhafterweise sämtlich in der zweiten Ebene, wobei sich die ersten und die zweite Ebene unterscheiden.

Ferner kann die erste und/oder zweite Untermenge lediglich ein Sendeelement aufweisen. Jedem Sendeelement wird bevorzugterweise ein Sendepixel zugeordnet. So können die erste und/oder die zweite Untermenge nur einen Sendepixel aufweisen und somit ein pixelweises Scannen erfolgen.

Das Verfahren umfasst ferner das Umsetzen verschiedener Positionen von Sendeelementen auf der Sendematrix mittels mindestens einer Sendeoptik in unterschiedliche Aussendewinkel, sodass ein Winkelscan erfolgen kann. Insbesondere ist hierfür zumindest ein Teil der Sendeelemente, bevorzugterweise sämtliche Sendeelemente, in der Brennebene mindestens einer Sendeoptik angeordnet.

Dabei kann nur eine Sendeoptik verwendet werden, oder es können unterschiedlichen Untermengen, insbesondere Untermatrizen und/oder Spalten und/oder Zeilen, der Sendeelemente der Sendematrix verschiedene Sendeoptiken mit bevorzugterweise gleicher Brennebene zugeordnet werden. Die Untermengen sind vorteilhafterweise gleich groß ausgebildet. In einem solchen Fall wird die Sendematrix in verschiedene, bevorzugterweise zusammenhängende Bereiche, insbesondere Untermatrizen, aufgeteilt, die jeweils eine eigene Sendeoptik erhalten. Die Untermatrizen haben bevorzugterweise die gleiche, insbesondere quadratische, Form, sie können jedoch auch unterschiedliche Formen aufweisen. Es ist sogar möglich, dass jedem Sendeelement eine eigene Sendeoptik zugeordnet wird. Auch für den Fall, dass mehrere Sendematrizen eingesetzt werden, ist es vorteilhaft jeder Matrix eine eigene Sendeoptik zuzuordnen.

Bei den Untermengen, denen eine eigene Sendeoptik zugeordnet ist, muss es sich insbesondere nicht, kann es sich aber, um die Untermengen der Sendematrix handeln, die simultan aktiviert werden.

Die hinter einer Sendeoptik gruppierten Sendeelemente können räumlich von den anderen hinter einer Sendeoptik gruppierten Sendeelementen getrennt sein, d.h. die einer Sendeoptik zugeordnete Menge der Sendeelemente bzw. die entsprechenden Pixel müssen sich nicht auf einem Halbleiter-Chip befinden. Dadurch können die herzustellenden Chips kleiner sein und das System gewinnt an Konfigurierbarkeit.

Die Verwendung mehrere Sendematrizen mit eigenen Sendeoptiken oder die Aufteilung der Sendematrix in mehrere Untermatrizen mit einzelnen Optiken erlaubt den Aufbau unterschiedlicher Gerätevarianten. Über die Anzahl der Sendeelemente kann die in die Szene transmittierte Leistung und somit die Reichweite des Sensors in einfacher Weise skaliert werden.

Die mindestens eine Sendeoptik dient zum Aussenden der Messpulse unter unterschiedlichen Winkeln. Bei der mindestens einen Sendeoptik handelt es sich vor allem um ein Weitwinkelobjektiv. Ferner kann die Sendeoptik mindestens ein phasengesteuertes optisches Element, sogenannte "phased-array optics", umfassen, bei denen durch eine räumliche Modifikation der optischen Phase eine Ablenkung von Pulsen in verschiedene Richtungen erfolgen kann. Dabei wird bevorzugterweise ein von einer Laserquelle abgegebenes Licht in eine Vielzahl von Pfaden geleitet, auf denen die entsprechenden Anteile eine individuelle Phasenverschiebung erfahren. Durch anschließende Überlagerung der in ihren Phasen beeinflussten verschiedenen Pfade kann erreicht werden, dass sich Strahlung nur in einer bestimmten Richtung ausbreitet, die durch Änderung der Phasen verändert werden kann.

Bei der Sendematrix handelt es sich vorteilhafterweise um einen "focal plane array", d.h. eine zweidimensionale Anordnung von Sendeelementen in der Brennebene einer Sendeoptik. Die Brennebene der mindestens einen Sendeoptik bestimmt entsprechend der Ausdehnungen der Sendematrix das Sichtfeld des Senders, sprich der senderseitigen Optik, vor allem der Sendeoptik.

Durch die Platzierung der Sendematrix oder Teilen davon in der Brennebene der Sendeoptik wird die Position der einzelnen Sendeelemente bzw. Pixel der Matrix durch die Optik in einen Winkel umgesetzt. In anderen Worten werden die auf die Sendeoptik treffenden, bevorzugterweise in parallele Richtungen verlaufenden, Messpulse durch die Sendeoptik in unterschiedliche Winkel abgelenkt, sodass ein großes Sichtfeld ausgeleuchtet werden kann, ohne dass dazu bewegliche Teile zum Ablenken oder Empfangen der Messpulse notwendig sind.

Durch das Adressieren verschiedener Untermengen der Sendeelemente ergibt sich ein Winkelscan. Es sind keine weiteren Komponenten zum Scannen erforderlich. Dadurch können die Kosten eines LIDAR Sensors und die Baugröße deutlich verkleinert werden. Weiter kann die Reihenfolge, in der die Messungen eines Scans aufgenommen werden frei bestimmt bzw. sogar während des Betriebs verändert werden. Damit wird eine größere Robustheit gegenüber Fremdbeeinflussung erzielt. Zusätzlich kann damit dynamisch eine Fokussierung auf bestimmte Bereiche des Sichtfeldes erfolgen.

Bei den Empfangselementen der Empfangsmatrix handelt es sich vor allem um photosensitive Flächen, die an Messobjekten reflektierte Messpulse empfangen und insbesondere detektieren können. Insbesondere umfasst das Verfahren ferner einen Schritt der Abbildung der reflektierten Messpulse aus unterschiedlichen Winkeln auf die mindestens eine Empfangsmatrix. Dafür wird insbesondere mindestens eine Empfangsoptik eingesetzt, in deren Brennebene ferner vorteilhaft die Empfangsmatrix platziert wird.

Hinsichtlich der Anzahl der verwendeten Empfangsmatrizen und/oder Empfangsoptiken sowie der Zuordnung der Empfangsoptiken zu den Empfangsmatrizen oder Bereichen von einer Empfangsmatrix gilt bevorzugterweise das zuvor Beschriebene hinsichtlich der Sendematrix und der Sendeoptik.

Bei der mindestens einen Empfangsoptik handelt es sich vor allem um ein Weitwinkelobjektiv, während die Empfangsmatrix vorteilhafterweise von einen "focal plane array", d.h. einer zweidimensionalen Anordnung von Empfangselementen in der Brennebene einer Empfangsoptik, gebildet wird. Die Brennebene der mindestens einen Empfangsoptik bestimmt entsprechend der Ausdehnungen der Empfangsmatrix das Sichtfeld des Empfängers, sprich der empfängerseitigen Optik, vor allem der Empfangsoptik. Ferner werden bevorzugterweise Empfangselementen der Empfangsmatrix Empfangspixel zugeordnet.

Es werden die Brennweite der Sendeoptik, die Dimensionen der Pixel der Sendematrix sowie die Dimensionen der gesamten Sendematrix derart eingestellt, dass das Beleuchtungsmuster an das empfängerseitig verwendete Sichtfeld und dessen Pixel angepasst ist. Auf der anderen Seite wird die Anordnung der Empfangsmatrix und der Empfangsoptik an das senderseitig erzeugte Beleuchtungsmuster angepasst.

Bei den fotosensitiven Flächen handelt es sich bevorzugterweise um Avalanche Photodetektoren, insbesondere um Single Photon Avalanche Detektoren, die insbesondere mit einer Biasspannung oberhalb ihrer Break-Down-Spannung betrieben werden. Diese Detektoren arbeiten somit im so genannten Geiger Mode, sodass ein einzelnes Photon kann den Lawinendurchbruch auslöst. Alternativ können ebenfalls andere Detektoren ohne die Verwendung eines Lawinendurchbruchs, bspw. Pin-Dioden, verwendet werden.

Bei dem Verfahren handelt es sich bevorzugterweise um ein Verfahren zur Längs- und Querregelung eines Fahrzeugs, insbesondere Automobils, basierend auf erkannten Objekten bzw. Freiräumen, wobei das Fahrzeug insbesondere autonom steuert, d.h. eine fahrerlose Fortbewegung des Fahrzeugs ermöglicht wird. Dies dient zur Pfadplanung und Bewegung entlang dieses Pfades durch das Fahrzeug. Unter dem Begriff "Messobjekt" können extra zur Regelung des Fahrzeuges angeordnete und ausschließlich dafür dienende Markierungen verstanden werden. Zudem können Messobjekte Umgebungsmerkmale darstellen, die sich in der Umgebung des Fahrzeugs befinden und deren Positionen zur Regelung des Fahrzeuges verwendet werden. Darunter fallen bspw. Bäume, Kantsteine, Fahrbahnmarkierungen oder andere Verkehrsteilnehmer. In einem solchen Fall werden typischerweise keine zusätzlich, ausschließlich für die Regelung angeordnete Markierungen verwendet. Bevorzugterweise betrifft das Verfahren ein Verfahren zur Navigation des Fahrzeuges.

Erfindungsgemäß werden der ersten Untermenge der Sendeelemente eine erste Untermenge der Empfangselemente und der zweiten Untermenge der Sendeelemente eine zweite Untermenge der Empfangselemente jeweils umfassend mindestens ein Empfangselement zugeordnet. Insbesondere wird jedem Sendeelement der Sendematrix ein Empfangselement der Empfangsmatrix zugeordnet. Vorteilhafterweise wird jedem Sendeelement genau ein Empfangselement zugeordnet, sodass es sich um eine eineindeutige Zuordnung handelt. Insbesondere befinden sich die Sendeelemente und die Empfangselemente, die einander zugeordnet sind, an ähnlichen, insbesondere identischen, Stellen auf der Sendematrix bzw. Empfangsmatrix.

Die erste und/oder zweite Untermenge der Empfangselemente umfasst mindestens ein, bevorzugterweise mehrere, Empfangselemente. Die Empfangselemente der Empfangsmatrix bilden - analog zur Sendematrix - eine Menge, von denen die erste und/oder die zweiten Untermenge eine echte Teilmenge ist.

Erfindungsgemäß werden die Empfangselemente derart aktiviert und/oder deaktiviert, dass im Wesentlichen gleichzeitig mit der Aktivierung der ersten Untermenge der Sendeelemente ausschließlich die erste Untermenge der Empfangselemente aktiv ist, sodass die erste Untermenge der Empfangselemente die von der ersten Untermenge der Sendeelemente ausgesandten und reflektierten Messpulse empfängt, und dass im Wesentlichen gleichzeitig mit der Aktivierung der zweiten Untermenge der Sendeelemente ausschließlich die zweite Untermenge der Empfangselemente aktiv ist, sodass die zweite Untermenge der Empfangselemente die von der zweiten Untermenge der Sendeelemente ausgesandten und reflektierten Messpulse empfängt. Es werden somit nur diejenigen Empfangselemente aktiviert, die der ersten oder der zweiten Untermenge der Sendeelemente zugeordnet sind. Im Wesentlich gleichzeitig bedeutet, dass die Aktvierung der Untermengen der Empfangselemente entweder gleichzeitig mit der Aktivierung der entsprechenden Untermengen der Sendeelemente erfolgt oder zumindest derart zeitgleich, dass von einer Untermenge der Sendeelemente ausgesandte Messpulse von der zugeordneten Untermenge der Empfangselemente detektiert werden können. Die maximale Zeitdifferenz zwischen der Aktivierung der Sendeelemente und der entsprechenden Empfangselemente darf somit keinesfalls die Dauer des Messfensters überschreiten. Das Messfenster ergibt sich aus der Annahme einer maximal zulässigen Messentfernung, da bei der Überschreitung einer bestimmten Entfernung keine detektierbaren Reflexionen von Objekten mehr zu erwarten sind. Die Dauer des Messfensters ergibt sich aus der maximal zulässigen Messentfernung und der Lichtgeschwindigkeit. Üblicherweise wird die Messung nach Ablauf der Dauer des Messfensters beendet. Das Vorsehen einer Zeitdifferenz zwischen der Aktivierung der Sendeelemente und der Aktivierung der entsprechenden Empfangselemente kann vorteilhafterweise auch zur Beeinflussung des Erfassungsbereichs in der Tiefe verwendet werden. Beispielsweise kann die Aktivierung der Empfangselemente erst erfolgen, nachdem die Messpulse bereits eine gewisse Strecke zurückgelegt haben, sodass Objekte im Nahbereich ausgeblendet werden, da deren vor Aktivierung der Empfangselemente bei diesen eingetroffen wäre. Solch ein Objekt im Nahbereich könnte zum Beispiel eine verschmutze Sensorfrontscheibe sein.

Insbesondere werden die nicht benötigten, da nicht beleuchteten Empfangselemente bzw. Pixel der Empfangsmatrix deaktiviert. Dies geschieht bei Avalanche Photodetektoren z. B. durch Absenkung der Biasspannung.

Vorteilhafterweise bilden die erste Untermenge und/oder die zweite Untermenge der Sendeelemente und/oder der Empfangselemente einen räumlich zusammenhängenden Bereich der Sendematrix bzw. der Empfangsmatrix. Insbesondere sind die Sendeelemente und/oder Empfangselemente der ersten und/oder der zweiten Untermenge benachbart zueinander angeordnet. Insbesondere werden die Messpulse der ersten und/oder zweiten Untermenge der Sendeelemente mithilfe der Sendeoptik in ähnliche Richtungen versendet. Vorteilhafterweise leuchten die Sendeelemente der ersten und/oder zweiten Untermenge einen räumlich zusammenhängenden Bereich des Sichtfeldes aus.

Ferner bevorzugt handelt es sich bei der ersten Untermenge und/oder der zweiten Untermenge der Sendeelemente und/oder der Empfangselemente um mindestens eine Zeile und/oder mindestens eine Spalte der Sendematrix bzw. der Empfangsmatrix. Ferner kann es sich bei den Untermengen um beliebige Untermatrizen der Sendematrix bzw. der Empfangsmatrix handeln. Insbesondere sind die erste Untermenge und/oder die zweite Untermenge der Sendeelemente und/oder der Empfangselemente räumlich benachbart zueinander ausgebildet.

Bevorzugterweise werden nach der ersten und der zweiten Untermenge der Sendeelemente und/oder Empfangselemente weitere Untermengen der Sendematrix und/oder der Empfangsmatrix aktiviert, die insbesondere einen Großteil der Sendematrix und/oder der Empfangsmatrix ausmachen. Vorteilhafterweise lässt sich die gesamte Sendematrix und/oder Empfangsmatrix in eine bestimmte Anzahl Untermengen aufteilen, wobei jede Untermenge mindestens einmal, bevorzugterweise genau einmal, während eines Scans des Sichtfeldes aktiviert wird. Durch die Ansteuerung, in anderen Worten Aktivierung, dieser Anzahl von Untermengen lässt sich das gesamte Sichtfeld scannen bzw. ausleuchten. Insbesondere werden die Untermengen der Sendeelemente und/oder der Empfangselemente derart angesteuert, dass räumlich zusammenhängende und benachbarte Bereiche der Sendematrix und/oder der Empfangsmatrix nacheinander aktiviert werden, sodass insbesondere eine sequentielle Erfassung des Sichtfeldes entlang einer Scanrichtung erfolgt. Dabei verläuft die Scanrichtung vor allem von einem Ende der Sendematrix und/oder der Empfangsmatrix zum gegenüberliegenden Ende dieser.

Beispielsweise kann ein horizontaler Scan durchgeführt werden, bei dem eine Spalte nach der anderen - als Untermengen der Sendeelemente und/oder Empfangselemente - sequentiell in auf oder absteigender Reihenfolge aktiviert bzw. deaktiviert werden. Ein anderes Beispiel stellt ein vertikaler Scan dar, bei denen analog die Zeilen der Sendematrix oder Empfangsmatrix - als Untermengen der Sendeelemente und/oder Empfangselemente - sequentiell aktiviert werden. In einer weiteren vorteilhaften Ausführung erfolgt die Aktivierung bzw. Deaktivierung der Untermengen nicht in aufoder absteigender Reihenfolge, sondern in willkürlicher Reihenfolge, die sich von Scan zu Scan ändern kann. Ferner erfolgt die Aktivierung bzw. Deaktivierung der Untermengen der Sendeelemente und/oder Empfangselemente derart, dass nicht zueinander benachbarte Untermengen nacheinander aktiviert werden, sondern sich eine zumindest scheinbar zufällige Abfolge der Aktivierung der Untermengen ergibt. Ein solches Verfahren hat eine sehr viel höhere Robustheit gegenüber Störimpulsen, da sein Schema von außen her schwer durchschaubar ist. Ferner bevorzugt erfolgt die Aktivierung und Deaktivierung der Untermengen basierend auf der Ergebnissen voraus gegangener Scans, so dass Bereiche von besonderem Interesse dichter überwacht werden können.

Ferner bevorzugt umfasst das Verfahren die Bestimmung der Zeitpunkte, zu denen Messpulse empfangen wurden, insbesondere mittels mindestens einer Auswerteeinheit. Insbesondere wird Untermengen, insbesondere Untermatrizen und/oder Zeilen und/oder Spalten, der Empfangselemente der Empfangsmatrix jeweils eine Auswerteeinheit zugeordnet. Bei den Untermengen, denen eine Auswerteeinheit zugeordnet ist, muss es sich insbesondere nicht, kann es sich aber, um die Untermengen zum Empfangen reflektierter Messpulse handeln, die simultan aktiviert werden. Alle einer Auswerteeinheit zugeordneten Empfangselemente sind mit dieser verbunden. Ferner kann jedem aktiven Empfangselement eine Auswerteeinheit zugeordnet sein. Dabei erfolgt die Anbindung der Empfangselemente bzw. Pixel der Empfangsmatrix an die Auswerteeinheiten über eine Selektionsschaltung, insbesondere Multiplexer, die dafür sorgt, dass nur die aktiven Empfangselemente bzw. Pixel mit der Auswerteelektronik verbunden sind. Die Anzahl der benötigten Auswerteeinheiten richtet sich nach der Größe der laserseitigen Pixelgruppen.

Unter einem weiteren Aspekt umfasst die Erfindung eine Vorrichtung zur Distanzmessung, die eine Sendematrix mit mehreren Sendeelementen zum Aussenden von Messpulsen und eine Empfangsmatrix mit mehreren Empfangselementen zum Empfangen von an Objekten reflektierten Messpulsen aufweist. Die Sendematrix umfasst eine erste Untermenge der Sendeelemente und eine zweite Untermenge der Sendeelemente, die jeweils mindestens ein, bevorzugterweise mehrere, Sendeelemente aufweisen. Erfindungsgemäß sind die Sendeelemente der Sendematrix derart aktivierbar und/oder deaktivierbar ausgebildet, dass zu einem ersten Zeitpunkt ausschließlich die erste Untermenge der Sendeelemente aktiv ist, sodass das mindestens eine der ersten Untermenge der Sendeelemente zugordnete Sendeelement einen Messpuls aussendet, und wobei zu einem zweiten Zeitpunkt ausschließlich die zweite Untermenge der Sendeelemente aktiv ist, sodass das mindestens eine der zweiten Untermenge der Sendeelemente zugordnete Sendeelement einen Messpuls aussendet.

Erfindungsgemäß ist der ersten Untermenge der Sendeelemente eine erste Untermenge der Empfangselemente und der zweiten Untermenge der Sendeelemente eine zweite Untermenge der Empfangselemente, die jeweils mindestens ein Empfangselement, bevorzugterweise eine Vielzahl von Empfangselementen, aufweisen, zugeordnet. Dabei sind die Empfangselemente derart aktivierbar und/oder deaktivierbar ausgebildet, dass im Wesentlichen gleichzeitig mit der

Aktivierung der ersten Untermenge der Sendeelemente ausschließlich die erste Untermenge der Empfangselemente aktiv ist, sodass die erste Untermenge der Empfangselemente die von der ersten Untermenge der Sendeelemente ausgesandten und reflektierten Messpulse empfängt, und wobei im Wesentlichen gleichzeitig mit der Aktivierung der zweiten Untermenge der Sendeelemente ausschließlich die zweite Untermenge der

Empfangselemente aktiv ist, sodass die zweite Untermenge der Empfangselemente die von der zweiten Untermenge der Sendeelemente ausgesandten und reflektierten Messpulse empfängt.

Vorteilhafterweise umfasst die Vorrichtung zur optischen Distanzmessung mindestens eine Sendeoptik zum Aussenden der Messpulse in unterschiedliche Richtungen, wobei zumindest ein Teil der Sendeelemente, bevorzugterweise sämtliche Sendeelemente, der Sendematrix in der Brennebene der mindestens einen Sendeoptik angeordnet ist. Ferner bevorzugt weist die Vorrichtung insbesondere mindestens eine Empfangsoptik zum Abbilden der Messpulse auf die Empfangsmatrix auf, wobei zumindest ein Teil der Empfangselemente, bevorzugterweise sämtliche Empfangselemente, der Empfangsmatrix vorteilhafterweise in der Brennebene der mindestens einen Empfangsoptik angeordnet ist.

Es ist die Brennweite der Sendeoptik, die Dimensionen der Pixel der Sendematrix sowie die Dimensionen der gesamten Sendematrix derart eingestellt, dass das Beleuchtungsmuster an das empfängerseitig verwendetes Sichtfeld und dessen Pixel angepasst ist. Auf der anderen Seite ist die Anordnung der Empfangsmatrix und der Empfangsoptik an das senderseitig erzeugte Beleuchtungsmuster angepasst.

In einer besonders bevorzugten Weiterbildung weist die Vorrichtung eine Vielzahl von Sendematrizen und/oder Empfangsmatrizen aufweist, wobei den Matrizen jeweils eine Sendeoptik bzw. Empfangsoptik zugeordnet ist.

Insbesondere handelt es sich bei der Vorrichtung um einen LIDAR Sensor, ferner vorteilhaft um einen Flash LIDAR Sensor. Gemäß der Erfindung lässt sich der Flash LIDAR Sensor sowohl im "Flash"-Modus betreiben, sodass simultan das gesamte Sichtfeld ausgeleuchtet wird, als auch in einem Scan-Modus, nämlich durch die aufeinanderfolgende Aktivierung von Untermengen der Sendematrix und/oder der Empfangsmatrix. Vorteilhafterweise sind die Elemente der Vorrichtung in Fortbewegungsrichtung des Messpulses derart angeordnet, dass der Sendematrix die Sendeoptik folgt. Nach Zurücklegen der Distanz zum Messobjekt, der Reflexion an einem Messobjekt und dem erneuten Zurücklegen der Distanz folgen die Empfangsoptik und darauf die Empfanesmatrix.

Insbesondere ist den Sendeelementen je ein Sendepixel und den Empfangselementen je ein Empfangspixel zugeordnet, wobei die Sendepixel in ihrer Ausdehnung größer ausgebildet sind als die Empfangspixel. Alternativ sind die Sendepixel kleiner als die Empfangspixel oder in anderen Worten die Empfangspixel größer als die Sendepixel ausgebildet. Dies erlaubt Toleranzen bei der Herstellung von Sende - und Empfangsmatrix sowie bei der Montage und Ausrichtung der Bestandteile der Vorrichtung. Weiterhin können damit Verzerrungen der Optiken ausgeglichen werden.

Insbesondere ist die Vorrichtung zur Durchführung des erfindungsgemäßen Verfahrens ausgebildet.

### Kurze Beschreibung der Zeichnungen

Es zeigen schematisch:
- Figur 1a: eine Draufsicht auf eine Sendematrix einer erfindungsgemäßen Vorrichtung;
- Figur 1b: eine Draufsicht auf eine Empfangsmatrix der erfindungsgemäßen Vorrichtung umfassend die Sendematrix nach Figur 1;
- Figur 2: die Gesamtausleuchtung der Empfangselemente der Empfangsmatrix einer erfindungsgemäßen Vorrichtung umfassend die Sendematrix und die Empfangsmatrix nach den Figuren 1a und 1b;
- Figur 3: eine teilweise Ausleuchtung der Empfangselemente der Empfangsmatrix nach der Figur 1a und 2 zu einem ersten Zeitpunkt;
- Figur 4: die Anbindung der Empfangselemente der Empfangsmatrix nach Figur 3 an Auswerteeinheiten;
- Figur 5: Zuordnung der Empfangselemente der Empfangsmatrix nach den Figuren 1b und 2 zu Empfangsoptiken; und
- Figur 6: die Gesamtausleuchtung der Empfangselemente einer weiteren Empfangsmatrix einer erfindungsgemäßen Vorrichtung.

### Bevorzugte Ausführungsformen der Erfindung

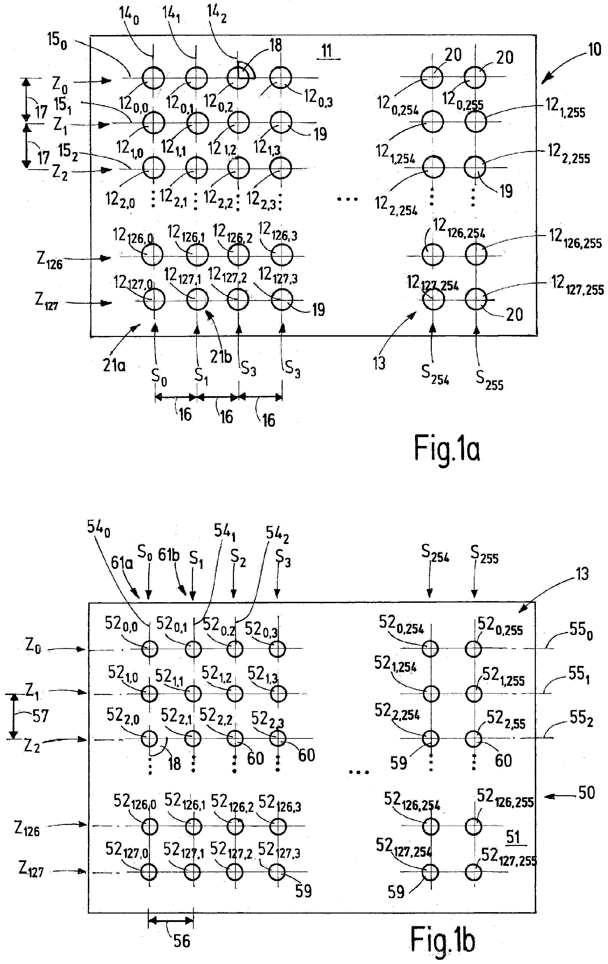

Figur 1a zeigt eine Draufsicht auf eine Sendematrix (10) einer erfindungsgemäßen Vorrichtung. In der Figur 1a ist eine Seite (11) der Sendematrix (10) dargestellt, auf denen Sendeelemente (12_{0,0} bis 12_{127,255}) in einem regelmäßigen Muster angeordnet sind. Bei dem Muster handelt es sich um ein gleichmäßiges Gitterraster (13). Die Sendeelemente (12_{0,0} bis 12_{127,255}) lassen sich in Zeilen (*Z*₀ bis *Z*₁₂₇) und Spalten (*S*₀ bis *S*₂₅₅) unterteilen. Insgesamt umfasst die Sendematrix (10) 128 Zeilen und 256 Spalten von Sendeelementen. Das Zeichen "..." in der Figur zeigt an, dass an dieser Stelle noch weitere Elemente der Matrix vorhanden sind, die der Übersichtlichkeit halber nicht dargestellt wurden. Die Unterzahl in der Bezifferung der Sendeelemente (12_{0,0} bis 12_{127,255}) gibt durch die erste Zahl an, in welcher Zeile der Sendematrix (10) sich ein bestimmtes Sendeelement befindet, während die zweite Zahl in der Unterzahl die Spalte beziffert, in der dieses Sendeelement angeordnet ist.

Die Sendeelemente (12_{0,0} bis 12_{127,255}) werden durch Laser (20) gebildet und sind derart angeordnet, dass jede Spalte (bspw. *S*₀) ein Sendeelement (in diesem Beispiel: 12_{0,0},12_{1,0},12_{2,0} bis 12_{126,0},12_{127,0}) jeder Zeile (*Z*₀ bis *Z*₁₂₇) umfasst, und dass jede Zeile (bspw. *Z*₀) ein Sendeelement (in diesem Beispiel: 12_{0,0},12_{0,1},12_{0,2} bis 12_{0,254},12_{0,255}) jeder Spalte (*S*₀ bis *S*₂₅₅) umfasst. Die Zeilen (*Z*₀ bis *Z*₁₂₇) weisen einen konstanten Zeilenabstand (17) auf, während die Spalten (*S*₀ bis *S*₂₅₅*)* einen konstanten Spaltenabstand (16) haben. Legt man gedachte Geraden durch die Mittelpunkte der Sendeelemente der Spalten (hier beispielhaft 14₀ bis 14₂) und durch die Mittelpunkte der Sendeelemente der Zeilen (hier beispielhaft 15₀ bis 15₂), weisen diese genau diesen Spaltenabstand (16) bzw. Zeilenabstand (17) zueinander auf. Ferner treffen sich die gedachten Geraden (14₀ bis 14₂) der Spalten und die gedachten Geraden (15₀ bis 15₂) der Zeilen unter rechten Winkeln (18). Jedem Sendeelemente (12_{0,0} bis 12_{127,255}) ist ein Sendepixel (19) zugeordnet. Die Sendepixel (19) sind gleich groß ausgebildet.

In Figur 1b ist eine Draufsicht auf eine Seite (51) einer Empfangsmatrix (50) einer erfindungsgemäßen Vorrichtung mit einer Vielzahl von Empfangselementen (52_{0,0} bis 52_{127,255}) gezeigt. Je einem Sendeelement (12_{0,0} bis 12_{127,255}) der Sendematrix (10) ist ein Empfangselement (52_{0,0} bis 52_{127,255}) der Empfangsmatrix (50) zugeordnet. Die Empfangselemente (52_{0,0} bis 52_{127,255}) sind in Form eines gleichmäßigen Gitterrasters (13) in 256 Spalten (*S*₀ bis *S*₂₅₅) und 128 Zeilen (*Z*₀ bis *Z*₁₂₇) angeordnet.

Die Empfangselemente (52_{0,0} bis 52_{127,255}) sind durch Single Photo Avalanche Detektoren (60) gebildet und sind - wie die Sendeelemente (12_{0,0} bis 12₁₂₇,₂₅₅) - derart angeordnet, dass jede Spalte (bspw. *S*₀) ein Empfangselement (in diesem Beispiel: 52_{0,0},52_{1,0},52_{2,0} bis 52_{126,0},52_{127,0}) jeder Zeile (*Z*₀ bis *Z*₁₂₇) umfasst, und dass jede Zeile (bspw. *Z*₀) ein Empfangselement (in diesem Beispiel: 52_{0,0},52_{0,1},52_{0,2} bis 52_{0,254},52_{0,255}) jeder Spalte (*S*₀ bis *S*₂₅₅) umfasst. Die Zeilen (*Z*₀ bis *Z*₁₂₇) und die Spalten (*S*₀ bis *S*₂₅₅) weisen einen konstanten Abstand, den Zeilenabstand (57) bzw. den Spaltenabstand (56), auf. Gedachte Geraden (hier beispielhaft 54₀ bis 54₂) durch die Mittelpunkte der Empfangselemente der Spalten sowie gedachte Geraden (hier beispielhaft 55₀ bis 55₂) durch die Mittelpunkte der Empfangselemente der Zeilen treffen sich unter einem rechten Winkel (18). Jedem Empfangselement (52_{0,0} bis 52_{127,255}) ist ein Empfangspixel (59) zugeordnet. Die Empfangspixel (59) sind untereinander gleich groß ausgebildet, jedoch kleiner als die Sendepixel (19) ausgebildet.

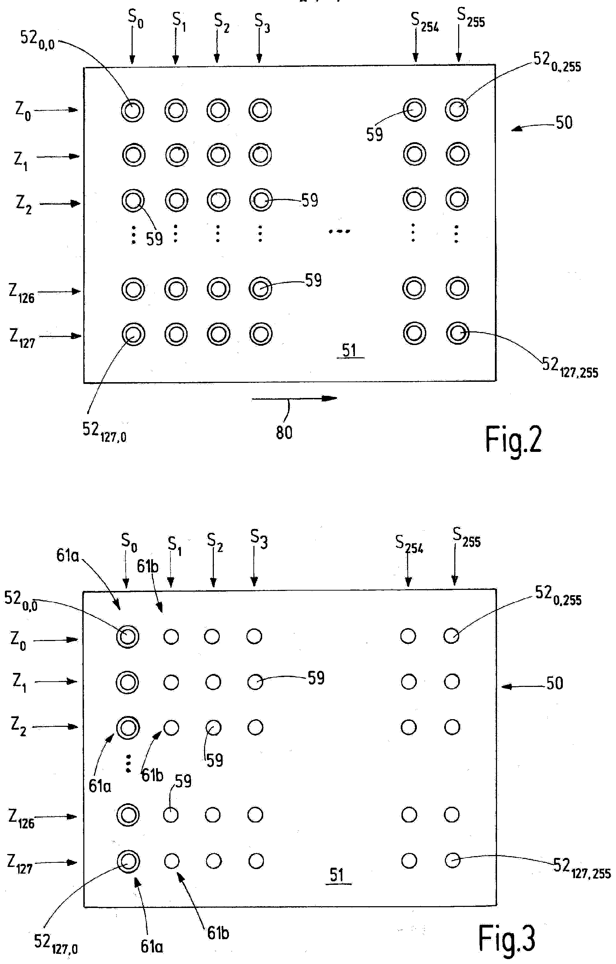

In Figur 2 ist die Ausleuchtung der Empfangsmatrix (50), genauer der Empfangselemente (52_{0,0} bis 52_{127,255}) bzw. der Empfangspixel (59) der Empfangsmatrix (50), nach Figur 1b durch die Sendematrix (10), genauer durch die Sendeelemente (12_{0,0} bis 12_{127,255}) bzw. den Sendepixeln (19) der Sendematrix (10), nach Figur 1a dargestellt. Dazu zeigt die Figur 2 eine Draufsicht auf die Seite (51) der Empfangsmatrix (50). Es ist die Gesamtausleuchtung gezeigt, das heißt, die Ausleuchtung, die resultiert, wenn jedes Sendeelemente (12_{0,0} bis 12_{127,255}) der Sendematrix (10) aktiv ist und Messpulse aussendet.

Figur 3 zeigt eine teilweise Ausleuchtung der Empfangsmatrix nach den Figuren 1b und 2 durch die Sendematrix (10) nach Figur 1a. Dazu bildet die erste Spalte (*S*₀) der Sendematrix (10) mit den Sendeelementen (12_{0,0},12_{1,0},12_{2,0} bis 12_{126,0},12_{127,0}) eine erste Untermenge (21a) der Sendeelemente (12_{0,0} bis 12_{127,255}), während die erste Spalte (*S*₀) der Empfangsmatrix (10) mit den Empfangselementen (52_{0,0},52_{1,0},52_{2,0} bis 52_{126,0},52_{127,0}) eine erste Untermenge (61a) der Empfangselemente (52_{0,0} bis 52_{127,255}) bildet. Die erste Untermenge (61a) der Empfangselemente (52_{0,0} bis 52_{127,255}) ist der ersten Untermenge (21a) der Sendeelemente (12_{0,0} bis 12_{127,255}) zugeordnet.

Figur 3 zeigt die Ausleuchtung zu einem ersten Zeitpunkt, an dem nur die erste Untermenge (21a) der Sendeelemente (12_{0,0} bis 12_{127,255}) sowie die entsprechende erste Untermenge (61a) der Empfangselemente (52_{0,0} bis 52_{127,255}) aktiv sind. Die übrigen Sendeelemente, genauer die Untermatrix mit den Elementen (12_{0,1} bis 12_{127,255}) und die übrigen Empfangselemente, genauer die Untermatrix mit den Elementen (52_{0,1} bis 52_{127,255}), sind deaktiviert, sodass die Empfangselemente in Figur 2 als nicht beleuchtet dargestellt sind. Nach Aktivierung der ersten Untermengen (21a, 61a) der Sendematrix (10) und Empfangsmatrix (50) wird nach erfindungsgemäßem Verfahren die zweite Spalte (*S*₁) als zweite Untermenge (21b) der Sendematrix (10) und die zweite Spalte (*S*₁) als zweite Untermenge (61b) der Empfangsmatrix (50) aktiviert. Insbesondere werden nacheinander die sich an die zweite Spalte (*S*₁) anschließenden Spalten der Sendematrix (10) und der Empfangsmatrix (50) in Scanrichtung (80) einzeln aktiviert. Es wird somit das gesamte Sichtfeld in einem sequentiellen Scan, genauer einem horizontalen Scan, ausgeleuchtet.

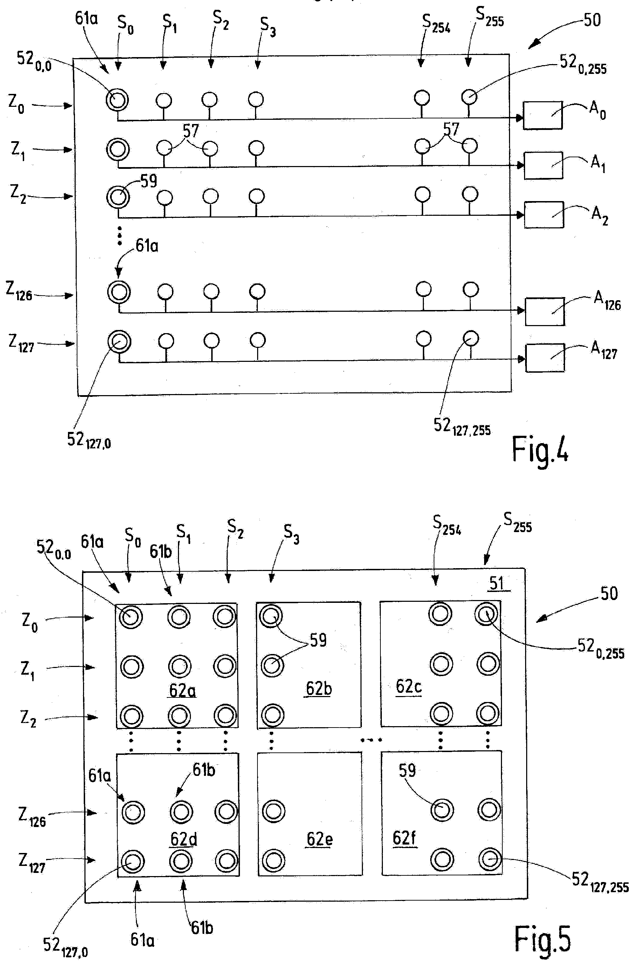

Figur 4 stellt die Anbindung der Empfangselemente (52_{0,0} bis 52_{127,255}) der Empfangsmatrix (50) nach Figur 3 an Auswerteeinheiten (*A*₀ bis *A*₁₂₇) dar. Jeder Zeile (*Z*₀ bis *Z*₁₂₇) der Empfangselemente (52_{0,0} bis 52_{127,255}) ist eine Auswerteeinheiten (*A*₀ bis *A*₁₂₇) zugeordnet. Alle Empfangselemente einer Zeile (*Z*₀ bis *Z*₁₂₇) sind somit an dieselbe Auswerteeinheit angebunden. Die nicht beleuchteten Empfangselemente, genauer die Elemente (52_{0,1} bis 52_{127,255}) der nicht beleuchteten Untermatrix, sind durch Absenken der Biasspannung deaktiviert. Die Anbindung der Empfangselemente (52_{0,0} bis 52_{127,255}) bzw. der Empfangspixel (59) an die Auswerteeinheiten (*A*₀ bis *A*₁₂₇) erfolgt über Multiplexer.

Figur 5 zeigt die Zuordnung der Empfangselemente (52_{0,0} bis 52_{127,255}) der Empfangsmatrix (50) nach den Figuren 1b und 2 zu Empfangsoptiken. Verschiedenen Untermengen (62a, 62b, 62c, 62d, 62e, 62f) der Empfangselemente (52_{0,0} bis 52_{127,255}) werden einzelne Empfangsoptiken zugeordnet. Die Untermengen (62a, 62b, 62c, 62d, 62e, 62f) bilden 3x3 Untermatrizen der Empfangsmatrix (50). Die Untermengen (62a, 62b, 62c, 62d, 62e, 62f) entsprechen nicht den Untermengen (21a, 21b), die zum Scannen aktiviert werden.

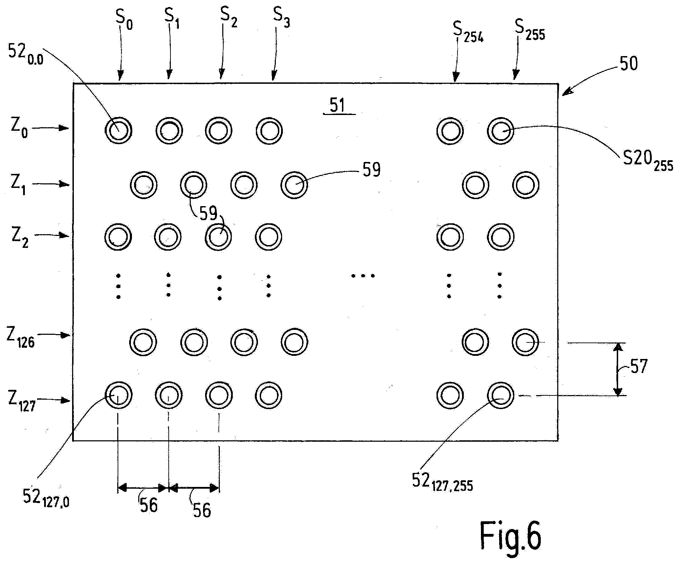

In Figur 6 ist die Gesamtausleuchtung der Empfangselemente (52_{0,0} bis 52_{127,255}) einer Empfangsmatrix (50) einer erfindungsgemäßen Vorrichtung abgebildet. Es ist eine Draufsicht auf eine Seite (51) der Empfangsmatrix (50) gezeigt. Der relevante Unterschied zu den in den Figuren 1a, 1b und 2 beschriebenen Sendematrix (10) und Empfangsmatrix (50) ist, dass die Zeilen (*Z*₀ bis *Z*₁₂₇) der Sendematrix (10) um einen halben Spaltenabstand (16, 56) gegeneinander versetzt sind, und zwar die zweite Zeile (*Z*₁) gegenüber der erste Zeile (*Z*₀) um einen halben Spaltenabstand (16, 56) nach rechts, während die dritte Zeile (*Z*₂) wiederum um einen halben Spaltenabstand (16, 56) nach links verschoben ist. Dieses Schema setzt sich bis zur untersten Zeile (*Z*₁₂₇) fort. Durch den Versatz sind die Spalten (*S*₀ bis *S*₂₅₅) nicht geradlinig ausgebildet, sondern verlaufen sozusagen in Zick-Zack-Linien. Als Spaltenabstand (16, 56) wird hier einfacherweise der konstante Abstand zwischen Elementen in einer Zeile (*Z*₀ bis *Z*₁₂₇) verstanden. Die obigen Ausführungen gelten ebenso für die Empfangsmatrix (50).

### Bezugszeichenliste

- 10: Sendematrix
- 11: Seite der Sendematrix
- 12_{0,0} bis 12_{127,255}: Sendeelemente der Sendematrix
- 13: gleichmäßiges Gitterraster
- 14₀ bis 14₂: gedachte Geraden durch die Mittelpunkte der Sendeelemente der Spalten
- 15₀ bis 15₂: gedachte Geraden durch die Mittelpunkte der Sendeelemente der Zeilen
- 16: Spaltenabstand
- 17: Zeilenabstand
- 18: rechter Winkel
- 19: Sendepixel

- 20: Laser
- 21a: erste Untermenge der Sendeelemente
- 21b: zweite Untermenge der Sendeelemente

- *Z*₀ bis *Z*₁₂₇: Zeilen
- *S*₀ bis *S*₂₅₅: Spalten

- 50: Empfangsmatrix
- 51: Seite der Empfangsmatrix
- 52_{0,0} bis 52_{127,255}: Empfangselemente
- 54₀ bis 54₃: gedachte Geraden durch die Mittelpunkte der Empfangselemente der Spalten
- 55₀ bis 55₃: gedachte Geraden durch die Mittelpunkte der Empfangselemente der Zeilen
- 56: Spaltenabstand
- 57: Zeilenabstand
- 59: Empfangspixel

- 60: Single Photon Avalanche Detektoren
- 61a: erste Untermenge der Empfangselemente
- 61b: zweite Untermenge der Empfangselemente
- 62a, 62b, 62c, 62d, 62e, 62f: einzelnen Empfangsoptiken zugeordnete Untermengen der Empfangselemente

- 80: Scanrichtung

## Patentansprüche

1. Verfahren zur optischen Distanzmessung,
wobei eine Vielzahl von Messpulsen durch mindestens eine Sendematrix (10) mit mehreren Sendeelementen (12_{0,0} bis 12_{127,255}) ausgesendet wird,
wobei mindestens ein ausgesendeter Messpuls von einem Messobjekt in Form eines reflektierten Messpulses reflektiert wird,
wobei der mindestens eine am Messobjekt reflektierte Messpuls durch mindestens eine Empfangsmatrix (50) mit mehreren Empfangselementen (52_{0,0} bis 52_{127,255}) empfangen wird,
wobei die Laufzeit des mindestens einen Messpulses zum Messobjekt ermittelt wird,
wobei mithilfe der Lichtgeschwindigkeit die vom Messpuls zurückgelegte Distanz zu dem Messobjekt bestimmt wird,
wobei die Sendematrix (10) eine erste Untermenge (21a) der Sendeelemente (12_{0,0} bis 12_{127,255}) und eine zweite Untermenge (21b) der Sendeelemente (12_{0,0} bis 12_{127,255}) jeweils umfassend mindestens ein Sendelement aufweist,
wobei
die Sendeelemente (12_{0,0} bis 12_{127,255}) der Sendematrix (10) derart aktiviert und/oder deaktiviert werden, dass zu einem ersten Zeitpunkt ausschließlich die erste Untermenge (21a) der Sendeelemente (12_{0,0} bis 12_{127,255}) aktiv ist, sodass ausschließlich das mindestens eine der ersten Untermenge (21a) der Sendeelemente (12_{0,0} bis 12_{127,255}) zugordnete Sendelement einen Messpuls aussendet, und dass zu einem zweiten Zeitpunkt ausschließlich die zweite Untermenge (21b) der Sendeelemente (12_{0,0} bis 12_{127,255}) aktiv ist, sodass ausschließlich das mindestens eine der zweiten Untermenge (21b) der Sendeelemente (12_{0,0} bis 12_{127,255}) zugordnete Sendelement einen Messpuls aussendet,
**dadurch gekennzeichnet,**
**dass** der ersten Untermenge (21a) der Sendeelemente (12_{0,0} bis 12_{127,255}) eine erste Untermenge (61a) der Empfangselemente (52_{0,0} bis 52_{127,255}) umfassend mindestens ein Empfangselement zugeordnet wird,
wobei der zweiten Untermenge (21b) der Sendeelemente (12_{0,0} bis 12_{127,255}) eine zweite Untermenge (61b) der Empfangselemente (52_{0,0} bis 52_{127,255} ) umfassend mindestens ein Empfangselement zugeordnet wird,
wobei die Empfangselemente (52_{0,0} bis 52_{127,255}) derart aktiviert und/oder deaktiviert werden,
**dass** im Wesentlichen gleichzeitig mit der Aktivierung der ersten Untermenge (21a) der Sendeelemente (12_{0,0} bis 12_{127,255}) ausschließlich die erste Untermenge (61a) der Empfangselemente (52_{0,0} bis 52_{127,255}) aktiv ist, sodass die erste Untermenge (61a) der Empfangselemente (52_{0,0} bis 52_{127,255}) die von der ersten Untermenge (21a) der Sendeelemente (12_{0,0} bis 12_{127,255}) ausgesandten und reflektierten Messpulse empfängt, und dass im Wesentlichen gleichzeitig mit der Aktivierung der zweiten Untermenge (21b) der Sendeelemente (12_{0,0} bis 12_{127,255}) ausschließlich die zweite Untermenge (61b) der Empfangselemente (52_{0,0} bis 52_{127,255}) aktiv ist, sodass die zweite Untermenge (61b) der Empfangselemente (52_{0,0} bis 52_{127,255}) die von der zweiten Untermenge (21b) der Sendeelemente (12_{0,0} bis 12_{127,255}) ausgesandten und reflektierten Messpulse empfängt.

2. Verfahren zur optischen Distanzmessung nach Anspruch 1,
**dadurch gekennzeichnet, dass** die erste Untermenge (21a) und/oder die zweite Untermenge (21b) der Sendeelemente (12_{0,0} bis 12_{127,255}) eine Vielzahl von Sendeelementen (12_{0,0},12_{1,0},12_{2,0} bis 12_{126,0},12_{127,0}) umfasst,
wobei die Sendeelemente (12_{0,0},12_{1,0},12_{2,0} bis 12_{126,0},12_{127,0}) der ersten Untermenge (21a) und/oder der zweiten Untermenge (21b) bei Aktivität simultan je mindestens einen Messpuls aussenden.

3. Verfahren zur optischen Distanzmessung nach einem der vorherigen Ansprüche,
wobei je einem Sendelement (12_{0,0} bis 12_{127,255}) der Sendematrix (10) ein Empfangselement (52_{0,0} bis 52_{127,255}) der Empfangsmatrix (50) zugeordnet wird.

4. Verfahren zur optischen Distanzmessung nach einem der vorherigen Ansprüche,
wobei die erste Untermenge (21a) und/oder die zweite Untermenge (21b) der Sendeelemente (12_{0,0} bis 12_{127,255}) und/oder der Empfangselemente (52_{0,0} bis 52_{127,255}) einen räumlich zusammenhängenden Bereich der Sendematrix (10) bzw. der Empfangsmatrix (50) bilden.

5. Verfahren zur optischen Distanzmessung nach einem der vorherigen Ansprüche,
wobei es sich bei der ersten Untermenge (21a) und/oder der zweiten Untermenge (21b) der Sendeelemente (12_{0,0} bis 12_{127,255}) und/oder der Empfangselemente (52_{0,0} bis 52_{127,255}) um mindestens eine Zeile (*Z*₀ bis *Z*₁₂₇) und/oder mindestens eine Spalte (*S*₀ bis *S*₂₅₅) und/oder eine Untermatrix der Sendematrix (10) bzw. der Empfangsmatrix (50) handelt.

6. Verfahren zur optischen Distanzmessung nach einem der vorherigen Ansprüche,
wobei die erste Untermenge (21a) und/oder die zweite Untermenge (21b) der Sendeelemente (12_{0,0} bis 12_{127,255}) und/oder der Empfangselemente (52_{0,0} bis 52_{127,255}) räumlich benachbart zueinander ausgebildet sind.

7. Verfahren zur optischen Distanzmessung nach einem der vorherigen Ansprüche,
wobei eine Vielzahl von Untermengen (21a, 21b) der Sendeelemente (12_{0,0} bis 12_{127,255}) und/oder der Empfangselemente (52_{0,0} bis 52_{127,255}) derart angesteuert wird, dass räumlich zusammenhängende und benachbarte Bereiche der Sendematrix (10) und/oder der Empfangsmatrix (50) nacheinander aktiviert werden,
sodass insbesondere eine sequentielle Erfassung des Sichtfeldes entlang einer Scanrichtung (80) erfolgt.

8. Vorrichtung zur optischen Distanzmessung,
wobei die Vorrichtung eine Sendematrix (10) mit mehreren Sendeelementen (12_{0,0} bis 12_{127,255}) zum Aussenden von Messpulsen und eine Empfangsmatrix (50) mit mehreren Empfangselementen (52_{0,0} bis 52_{127,255}) zum Empfangen von an Objekten reflektierten Messpulsen aufweist,
wobei die Sendematrix (10) eine erste Untermenge (21a) der Sendeelemente (12_{0,0} bis 12_{127,255}) und eine zweite Untermenge (21b) der Sendeelemente (12_{0,0} bis 12_{127,255}) je umfassend mindestens ein Sendelement aufweist,
die Sendeelemente (12_{0,0} bis 12_{127,255}) der Sendematrix (10) derart aktivierbar und/oder deaktivierbar ausgebildet sind, dass zu einem ersten Zeitpunkt ausschließlich die erste Untermenge (21a) der Sendeelemente (12_{0,0} bis 12_{127,255}) aktiv ist, sodass das mindestens eine der ersten Untermenge (21a) der Sendeelemente (12_{0,0} bis 12_{127,255}) zugordnete Sendelement einen Messpuls aussendet, und dass zu einem zweiten Zeitpunkt ausschließlich die zweite Untermenge (21b) der Sendeelemente (12_{0,0} bis 12_{127,255}) aktiv ist, sodass das mindestens eine der zweiten Untermenge (21b) der Sendeelemente (12_{0,0} bis 12_{127,255}) zugordnete Sendelement einen Messpuls aussendet,
**dadurch gekennzeichnet,**
**dass** der ersten Untermenge (21a) der Sendeelemente (12_{0,0} bis 12_{127,255}) eine erste Untermenge (61a) der Empfangselemente (52_{0,0} bis 52_{127,255}) umfassend mindestens ein Empfangselement zugeordnet ist,
wobei der zweiten Untermenge (21b) der Sendeelemente (12_{0,0} bis 12_{127,255}) eine zweite Untermenge (61b) der Empfangselemente (52_{0,0} bis 52_{127,255}) umfassend mindestens ein Empfangselement zugeordnet ist,
wobei die Empfangselemente (52_{0,0} bis 52_{127,255}) derart aktivierbar und/oder deaktivierbar ausgebildet sind,
**dass** im Wesentlichen gleichzeitig mit der Aktivierung der ersten Untermenge (21a) der Sendeelemente (12_{0,0} bis 12_{127,255}) ausschließlich die erste Untermenge (61a) der Empfangselemente (52_{0,0} bis 52_{127,255}) aktiv ist, sodass die erste Untermenge (61a) der Empfangselemente die von der ersten Untermenge (21) der Sendeelemente (12_{0,0} bis 12_{127,255}) ausgesandten und reflektierten Messpulse empfängt, und dass im Wesentlichen gleichzeitig mit der Aktivierung der zweiten Untermenge (21b) der Sendeelemente (12_{0,0} bis 12_{127,255}) ausschließlich die zweite Untermenge (61b) der Empfangselemente (52_{0,0} bis 52_{127,255}) aktiv ist, sodass die zweite Untermenge (61b) der Empfangselemente (52_{0,0} bis 52_{127,255}) die von der zweiten Untermenge (21b) der Sendeelemente (12_{0,0} bis 12_{127,255}) ausgesandten und reflektierten Messpulse empfängt.

9. Vorrichtung zur optischen Distanzmessung nach Anspruch 8, **dadurch gekennzeichnet, dass**
die Vorrichtung mindestens eine Sendeoptik zum Aussenden der Messpulse in unterschiedliche Richtungen aufweist,
wobei zumindest ein Teil der Sendeelemente (12_{0,0} bis 12_{127,255}) der Sendematrix (10) in der Brennebene der mindestens einen Sendeoptik angeordnet ist,
wobei die Vorrichtung insbesondere mindestens eine Empfangsoptik zum Abbilden der Messpulse auf die Empfangsmatrix aufweist,
wobei zumindest ein Teil der Empfangselemente (52_{0,0} bis 52_{127,255}) der Empfangsmatrix (50) bevorzugterweise in der Brennebene der mindestens einen Empfangsoptik angeordnet ist.

10. Vorrichtung zur optischen Distanzmessung nach einem der vorherigen Ansprüche,
**dadurch gekennzeichnet, dass**
die Vorrichtung eine Vielzahl von Sendematrizen (10) und/oder Empfangsmatrizen (50) aufweist,
wobei den Sendematrizen (10) und/oder Empfangsmatrizen (50) jeweils eine Sendeoptik bzw. Empfangsoptik zugeordnet ist.

11. Vorrichtung zur optischen Distanzmessung nach einem der vorherigen Ansprüche,
**dadurch gekennzeichnet, dass**
es sich bei der Vorrichtung um einen LIDAR Sensor, insbesondere einen Flash LIDAR Sensor, handelt.

12. Vorrichtung zur optischen Distanzmessung nach einem der vorherigen Ansprüche,
**dadurch gekennzeichnet, dass**
den Sendeelementen (12_{0,0} bis 12_{127,255}) je ein Sendepixel (19) zugeordnet ist,
wobei den Empfangselementen (52_{0,0} bis 52_{127,255}) je ein Empfangspixel (59) zugeordnet ist,
wobei die Sendepixel (19) in ihrer Ausdehnung größer oder kleiner ausgebildet sind als die Empfangspixel (59).

13. Vorrichtung zur optischen Distanzmessung nach einem der vorherigen Ansprüche,
**dadurch gekennzeichnet, dass**
die Vorrichtung zur Durchführung eines der Verfahren nach einem der Ansprüche 1 bis 7 ausgebildet ist.

## Claims

1. Method for optical distance measurement,
wherein a plurality of measuring pulses is transmitted by at least one transmission matrix (10) with several transmitting elements (12_{0,0} to 12_{127,255}),
wherein at least one transmitted measuring pulse is reflected by a measuring object in the form of a reflected measuring pulse,
wherein the at least one measuring pulse reflected on the measuring object is received by at least one reception matrix (50) with several receiving elements (52_{0,0} to 52_{127,255}),
wherein the transit time of the at least one measuring pulse to the measuring object is determined,
wherein the distance covered by the measuring pulse to the measuring object is determined using the speed of light,
wherein the transmission matrix (10) has a first subset (21a) of the transmitting elements (12_{0,0} to 12_{127,255}) and a second subset (21b) of the transmitting elements (12_{0,0} to 12_{127,255}), each comprising at least one transmitting element,
wherein
the transmitting elements (12_{0,0} to 12_{127,255}) of the transmission matrix (10) are activated and / or deactivated in such a way that at a first point in time only the first subset (21a) of the transmitting elements (12_{0,0} to 12_{127,255}) is active, so that only the at least one transmitting element assigned to the first subset (21a) of the transmitting elements (12_{0,0} to 12_{127,255}) sends out a measuring pulse, and that at a second point in time only the second subset (21b) of the transmitting elements (12_{0,0} to 12_{127,255}) is active, so that only at least one transmitting element assigned to the second subset (21b) of the transmitting elements (12_{0,0} to 12_{127,255}) sends out a measuring pulse, **characterized in that**
a first subset (61a) of the receiving elements (52_{0,0} to 52_{127,255}) comprising at least one receiving element is assigned to the first subset (21a) of the transmitting elements (12_{0,0} to 12_{127,255}),
wherein a second subset (61b) of the receiving elements (52_{0.0} to 52_{127.255}) comprising at least one receiving element is assigned to the second subset (21b) of the transmitting elements (12_{0,0} to 12_{127,255}),
wherein the receiving elements (52_{0,0} to 52_{127,255}) are activated and / or deactivated in such a way
that essentially simultaneously with the activation of the first subset (21a) of the transmitting elements (12_{0,0} to 12_{127,255}) only the first subset (61a) of the receiving elements (52_{0,0} to 52_{127,255}) is active, so that the first subset (61a) of the receiving elements (52_{0,0} to 52_{127,255}) receives the measuring pulses emitted and reflected by the first subset (21a) of the transmitting elements (12_{0,0} to 12_{127,255}), and that essentially simultaneously with the activation of the second subset (21b) of the transmitting elements (12_{0,0} to 12_{127,255}) only the second subset (61b) of the receiving elements (52_{0,0} to 52_{127,255}) is active, so that the second subset (61b) of the receiving elements (52_{0,0} to 52_{127,255}) receives the measuring pulses transmitted and reflected by the second subset (21b) of the transmitting elements (12_{0,0} to 12_{127,255}).

2. Method for optical distance measurement according to claim 1,
**characterized in that** the first subset (21a) and / or the second subset (21b) of the transmitting elements (12_{0,0} to 12_{127,255}) comprises a plurality of transmitting elements (12_{0,0}, 12_{1,0}, 12_{2,0} to 12_{126,0}, 12_{127,0}),
wherein the transmitting elements (12_{0,0}, 12_{1,0}, 12_{2,0} to 12_{126,0}, 12_{127,0}) of the first subset (21a) and / or the second subset (21b) during activity simultaneously transmit at least one measuring pulse.

3. Method for optical distance measurement according to one of the preceding claims,
wherein a receiving element (52_{0,0} to 52_{127,255}) of the reception matrix (50) is assigned to each transmitting element (12_{0,0} to 12_{127,255}) of the transmission matrix (10).

4. Method for optical distance measurement according to one of the preceding claims,
wherein the first subset (21a) and / or the second subset (21b) of the transmitting elements (12_{0,0} to 12_{127,255}) and / or the receiving elements (52_{0,0} to 52_{127,255}) form a spatially correlated area of the transmission matrix (10) or the reception matrix (50).

5. Method for optical distance measurement according to one of the preceding claims,
wherein the first subset (21a) and / or the second subset (21b) of the transmitting elements (12_{0,0} to 12_{127,255}) and / or the receiving elements (52_{0,0} to 52_{127,255}) is at least one row (Z₀ to Z₁₂₇) and / or at least one column (*S*₀ to *S*₂₅₅) and / or a sub-matrix of the transmission matrix (10) or the reception matrix (50).

6. Method for optical distance measurement according to one of the preceding claims,
wherein the first subset (21a) and / or the second subset (21b) of the transmitting elements (12_{0,0} to 12_{127,255}) and / or the receiving elements (52_{0,0} to 52_{127,255}) are spatially adjacent to each other.

7. Method for optical distance measurement according to one of the preceding claims,
wherein a plurality of subsets (21a, 21b) of the transmitting elements (12_{0,0} to 12_{127,255}) and / or the receiving elements (52_{0,0} to 52_{127,255}) is controlled in such a way that spatially correlated and adjacent areas of the transmission matrix (10) and / or the reception matrix (50) are activated in succession,
so that in particular a sequential recording of the field of view takes place along a scanning direction (80).

8. Device for optical distance measurement,
wherein the device has a transmission matrix (10) with a several transmitting elements (12_{0,0} to 12_{127,255}) for transmitting measuring pulses and a reception matrix (50) with several receiving elements (52_{0,0} to 52_{127,255}) for receiving measuring pulses reflected on objects,
wherein the transmission matrix (10) has a first subset (21a) of the transmitting elements (12_{0,0} to 12_{127,255}) and a second subset (21b) of the transmitting elements (12_{0,0} to 12_{127,255}), each comprising a transmitting element,
the transmitting elements (12_{0,0} to 12_{127,255}) of the transmission matrix (10) are designed so that they can be activated and / or deactivated in such a way that at a first point in time only the first subset (21a) of the transmitting elements (12_{0,0} to 12_{127,255}) is active, so that the at least one transmitting element assigned to the first subset (21a) of the transmitting elements (12_{0,0} to 12_{127,255}) transmits a measuring pulse, and that at a second point in time only the second subset (21b) of the transmitting elements (12_{0,0} to 12_{127,255}) is active, so that the at least one transmitting element assigned to the second subset (21b) of the transmitting elements (12_{0,0} to 12_{127,255}) transmits a measuring pulse, **characterized in that** a first subset (61a) of the receiving elements (52_{0.0} to 52_{127.255}) comprising at least one receiving element is assigned to the first subset (21a) of the transmitting elements (12_{0,0} to 12_{127,255}), wherein a second subset (61b) of the receiving elements (52_{0,0} to 52_{127,255}) comprising at least one receiving element is assigned to the second subset (21b) of the transmitting elements (12_{0,0} to 12_{127,255}),
wherein the receiving elements (52_{0,0} to 52_{127,255}) can be activated and / or deactivated in such a way
that essentially simultaneously with the activation of the first subset (21a) of the transmitting elements (12_{0,0} to 12_{127,255}) only the first subset (61a) of the receiving elements (52_{0,0} to 52_{127,255}) is active, so that the first subset (61a) of the receiving elements receives the measuring pulses transmitted and reflected by the first subset (21) of the transmitting elements (12_{0,0} to 12_{127,255}), and that essentially simultaneously with the activation of the second subset (21b) of the transmitting elements (12_{0,0} to 12_{127,255}) only the second subset (61b) of the receiving elements (52_{0,0} to 52_{127,255}) is active, so that the second subset (61b) of the receiving elements (52_{0,0} to 52_{127,255}) receives the measuring pulses transmitted and reflected by the second subset (21b) of the transmitting elements (12_{0,0} to 12_{127,255}).

9. Device for optical distance measurement according to claim 8, **characterized in that**
the device has at least one transmitting optical system for transmitting the measuring pulses in different directions,
wherein at least part of the transmitting elements (12_{0,0} to 12_{127,255}) of the transmission matrix (10) is arranged in the focal plane of the at least one transmitting optical system,
wherein the device in particular has at least one receiving optical system for imaging the measuring pulses on the reception matrix,
wherein at least part of the receiving elements (52_{0,0} to 52_{127,255}) of the reception matrix (50) is preferably arranged in the focal plane the at least one receiving optical system.

10. Device for optical distance measurement according to one of the preceding claims,
**characterized in that**
the device has a plurality of transmission matrices (10) and / or reception matrices (50),
wherein a transmitting optical system or a receiving optical system each is assigned to the transmission matrices (10) and / or reception matrices (50).

11. Device for optical distance measurement according to one of the preceding claims,
**characterized in that**
the device is a LIDAR sensor, in particular a Flash LIDAR sensor.

12. Device for optical distance measurement according to one of the preceding claims,
**characterized in that**
a transmitting pixel (19) each is assigned to the transmitting elements (12_{0,0} to 12_{127,255}),
wherein a receiving pixel (59) each is assigned to the receiving elements (52_{0,0} to 52_{127,255}),
wherein the transmitting pixels (19) are larger or smaller in dimension than the receiving pixels (59).

13. Device for optical distance measurement according to one of the preceding claims,
**characterized in that**
the device is designed to carry out one of the methods according to one of claims 1 to 7.

## Revendications

1. Procédé pour la mesure optique de distance,
dans lequel une pluralité d'impulsions de mesure sont émises par au moins une matrice d'émission (10) avec plusieurs éléments d'émission (12_{0,0} à 12_{127,255}),
dans lequel au moins une impulsion de mesure émise est réfléchie par un objet de mesure sous la forme d'une impulsion de mesure réfléchie,
dans lequel l'au moins une impulsion de mesure réfléchie au niveau de l'objet de mesure est réceptionnée par au moins une matrice de réception (50) avec plusieurs éléments de réception (52_{0,0} à 52_{127,255}),
dans lequel le temps de propagation de l'au moins une impulsion de mesure vers l'objet de mesure est déterminé,
dans lequel, à l'aide de la vitesse de la lumière, la distance parcourue par l'impulsion de mesure jusqu'à l'objet de mesure est déterminée,
dans lequel la matrice d'émission (10) présente un premier sous-ensemble (21a) des éléments d'émission (12_{0,0} à 12_{127,255}) et un deuxième sous-ensemble (21b) des éléments d'émission (12_{0,0} à 12_{127,255}) comprenant respectivement au moins un élément d'émission,
dans lequel les éléments d'émission (12_{0,0} à 12_{127,255}) de la matrice d'émission (10) sont activés et/ou désactivés de manière à ce qu'à un premier moment, exclusivement le premier sous-ensemble (21a) des éléments d'émission (12_{0,0} à 12_{127,255}) est actif de sorte qu'exclusivement l'au moins un élément d'émission associé au premier sous-ensemble (21a) des éléments d'émission (12_{0,0} à 12_{127,255}) émet une impulsion de mesure et qu'à un deuxième moment, exclusivement le deuxième sous-ensemble (21b) des éléments d'émission (12_{0,0} à 12_{127,255}) est actif de sorte qu'exclusivement l'au moins un élément d'émission associé au deuxième sous-ensemble (21b) des éléments d'émission (12_{0,0} à 12_{127,255}) émet une impulsion de mesure,
**caractérisé en ce que** l'on associe au premier sous-ensemble (21a) des éléments d'émission (12_{0,0} à 12_{127,255}) un premier sous-ensemble (61a) des éléments de réception (52_{0,0} à 52_{127,255}) comprenant au moins un élément de réception,
dans lequel on associe au deuxième sous-ensemble (21b) des éléments d'émission (12_{0,0} à 12_{127,255}) un deuxième sous-ensemble (61b) des éléments de réception (52_{0,0} à 52_{127,255}) comprenant au moins un élément de réception,
dans lequel les éléments de réception (52_{0,0} à 52_{127,255}) sont activés et/ou désactivés de telle sorte que, sensiblement en même temps que l'activation du premier sous-ensemble (21a) des éléments d'émission (12_{0,0} à 12_{127,255}), exclusivement le premier sous-ensemble (61a) des éléments de réception (52_{0,0} à 52_{127,255}) est actif de sorte que le premier sous-ensemble (61a) des éléments de réception (52_{0,0} à 52_{127,255}) réceptionne les impulsions de mesure, émises et réfléchies par le premier sous-ensemble (21a) des éléments d'émission (12_{0,0} à 12_{127,255}), et que sensiblement en même temps que l'activation du deuxième sous-ensemble (21b) des éléments d'émission (12_{0,0} à 12_{127,255}), exclusivement le deuxième sous-ensemble (61b) des éléments de réception (52_{0,0} à 52_{127,255}) est actif de sorte que le deuxième sous-ensemble (61b) des éléments de réception (52_{0,0} à 52_{127,255}) réceptionne les impulsions de mesure, émises et réfléchies par le deuxième sous-ensemble (21b) des éléments d'émission (12_{0,0} à 12_{127,255}).

2. Procédé pour la mesure optique de distance selon la revendication 1,
**caractérisé en ce que** le premier sous-ensemble (21a) et/ou le deuxième sous-ensemble (21b) des éléments d'émission (12_{0,0} à 12_{127,255}) comprend une pluralité d'éléments d'émission (12_{0,0}, 12_{1,0}, 12_{2,0} à 12_{126,0}, 12_{127,0}),
dans lequel les éléments d'émission (12_{0,0}, 12_{1,0}, 12_{2,0} à 12_{126,0}, 12_{127,0}) du premier sous-ensemble (21a) et/ou du deuxième sous-ensemble (21b) émettent, en cas d'activité, respectivement simultanément au moins une impulsion de mesure.

3. Procédé pour la mesure optique de distance selon l'une des revendications précédentes,
dans lequel on associe respectivement, à un élément d'émission (12_{0,0} à 12_{127,255}) de la matrice d'émission (10), un élément de réception (52_{0,0} à 52_{127,255}) de la matrice de réception (50).

4. Procédé pour la mesure optique de distance selon l'une des revendications précédentes,
dans lequel le premier sous-ensemble (21a) et/ou le deuxième sous-ensemble (21b) des éléments d'émission (12_{0,0} à 12_{127,255}) et/ou des éléments de réception (52_{0,0} à 52_{127,255}) forment une zone spatialement continue de la matrice d'émission (10) ou de la matrice de réception (50).

5. Procédé pour la mesure optique de distance selon l'une des revendications précédentes,
dans lequel, concernant le premier sous-ensemble (21a) et/ou le deuxième sous-ensemble (21b) des éléments d'émission (12_{0,0} à 12_{127,255}) et/ou des éléments de réception (52_{0,0} à 52_{127,255}), il s'agit d'au moins une ligne (Z₀ à Z₁₂₇) et/ou d'au moins une colonne (S₀ à S₂₅₅) et/ou d'une sous-matrice de la matrice d'émission (10) ou de la matrice de réception (50).

6. Procédé pour la mesure optique de distance selon l'une des revendications précédentes,
dans lequel le premier sous-ensemble (21a) et/ou le deuxième sous-ensemble (21b) des éléments d'émission (12_{0,0} à 12_{127,255}) et/ou des éléments de réception (52_{0,0} à 52_{127,255}) sont réalisés de manière spatialement adjacente entre eux.

7. Procédé pour la mesure optique de distance selon l'une des revendications précédentes,
dans lequel une pluralité de sous-ensembles (21a, 21b) des éléments d'émission (12_{0,0} à 12_{127,255}) et/ou des éléments de réception (52_{0,0} à 52_{127,255}) est commandée de manière à ce que des zones spatialement continues et adjacentes de la matrice d'émission (10) et/ou de la matrice de réception (50) sont activées les unes après les autres,
de sorte qu'il s'en suit en particulier une détection séquentielle du champ de vision le long d'une direction de balayage (80).

8. Dispositif pour la mesure optique de distance,
dans lequel le dispositif présente une matrice d'émission (10) avec plusieurs éléments d'émission (12_{0,0} à 12_{127,255}) pour l'émission d'impulsions de mesure et une matrice de réception (50) avec plusieurs éléments de réception (52_{0,0} à 52_{127,255}) pour la réception d'impulsions de mesure réfléchies au niveau d'objets,
dans lequel la matrice d'émission (10) présente un premier sous-ensemble (21a) des éléments d'émission (12_{0,0} à 12_{127,255}) et un deuxième sous-ensemble (21b) des éléments d'émission (12_{0,0} à 12_{127,255}) comprenant respectivement au moins un élément d'émission,
les éléments d'émission (12_{0,0} à 12_{127,255}) de la matrice d'émission (10) étant réalisés de manière à pouvoir être activés et/ou désactivés de manière à ce qu'à un premier moment, exclusivement le premier sous-ensemble (21a) des éléments d'émission (12_{0,0} à 12_{127,255}) est actif de sorte que l'au moins un élément d'émission associé au premier sous-ensemble (21a) des éléments d'émission (12_{0,0} à 12_{127,255}) émet une impulsion de mesure et qu'à un deuxième moment, exclusivement le deuxième sous-ensemble (21b) des éléments d'émission (12_{0,0} à 12_{127,255}) est actif de sorte que l'au moins un élément d'émission associé au deuxième sous-ensemble (21b) des éléments d'émission (12_{0,0} à 12_{127,255}) émet une impulsion de mesure,
**caractérisé en ce que** l'on associe, au premier sous-ensemble (21a) des éléments d'émission (12_{0,0} à 12_{127,255}), un premier sous-ensemble (61a) des éléments de réception (52_{0,0} à 52_{127,255}) comprenant au moins un élément de réception,
dans lequel on associe, au deuxième sous-ensemble (21b) des éléments d'émission (12_{0,0} à 12_{127,255}), un deuxième sous-ensemble (61b) des éléments de réception (52_{0,0} à 52_{127,255}) comprenant au moins un élément de réception,
dans lequel les éléments de réception (52_{0,0} à 52_{127,255}) sont réalisés de manière à pouvoir être activés et/ou désactivés de telle sorte que, sensiblement en même temps que l'activation du premier sous-ensemble (21a) des éléments d'émission (12_{0,0} à 12_{127,255}), exclusivement le premier sous-ensemble (61a) des éléments de réception (52_{0,0} à 52_{127,255}) est actif de sorte que le premier sous-ensemble (61a) des éléments de réception réceptionne les impulsions de mesure, émises et réfléchies par le premier sous-ensemble (21a) des éléments d'émission (12_{0,0} à 12_{127,255}), et que sensiblement en même temps que l'activation du deuxième sous-ensemble (21b) des éléments d'émission (12_{0,0} à 12_{127,255}), exclusivement le deuxième sous-ensemble (61b) des éléments de réception (52_{0,0} à 52_{127,255}) est actif de sorte que le deuxième sous-ensemble (61b) des éléments de réception (52_{0,0} à 52_{127,255}) réceptionne les impulsions de mesure, émises et réfléchies par le deuxième sous-ensemble (21b) des éléments d'émission (12_{0,0} à 12_{127,255}).

9. Dispositif pour la mesure optique de distance selon la revendication 8, **caractérisé en ce que** le dispositif présente au moins une optique d'émission pour l'émission des impulsions de mesure dans des directions différentes,
dans lequel au moins une partie des éléments d'émission (12_{0,0} à 12_{127,255}) de la matrice d'émission (10) est disposée dans le plan focal de l'au moins une optique d'émission,
dans lequel le dispositif présente en particulier au moins une optique de réception pour la représentation des impulsions de mesure sur la matrice de réception,
dans lequel au moins une partie des éléments de réception (52_{0,0} à 52_{127,255}) de la matrice de réception est de préférence disposée dans le plan focal de l'au moins une optique de réception (50).

10. Dispositif pour la mesure optique de distance selon l'une des revendications précédentes,
**caractérisé en ce que** le dispositif présente une pluralité de matrices d'émission (10) et/ou de matrices de réception (50),
dans lequel on associe aux matrices d'émission (10) et/ou matrices de réception (50) respectivement une optique d'émission ou optique de réception.

11. Dispositif pour la mesure optique de distance selon l'une des revendications précédentes,
**caractérisé en ce que**, concernant le dispositif, il s'agit d'un capteur LIDAR, en particulier d'un capteur flash-LIDAR.

12. Dispositif pour la mesure optique de distance selon l'une des revendications précédentes,
**caractérisé en ce que** l'on associe aux éléments d'émission (12_{0,0} à 12_{127,255)} respectivement un pixel d'émission (19),
dans lequel on associe aux éléments de réception (52_{0,0} à 52_{127,255}) respectivement un pixel de réception (59),
dans lequel les pixels d'émission (19) sont réalisés de manière plus grande ou plus petite concernant leur dimension que les pixels de réception (59).

13. Dispositif pour la mesure optique de distance selon l'une des revendications précédentes,
**caractérisé en ce que** le dispositif est réalisé pour la mise en œuvre d'un procédé selon l'une des revendications 1 à 7.
